**Europäisches Patentamt**

**European Patent Office**

**Office européen des brevets**

(11) Publication number: **0 138 623**
**B1**

(12) **EUROPEAN PATENT SPECIFICATION**

(45) Date of publication of patent specification: **31.05.89**

(21) Application number: **84307138.2**

(22) Date of filing: **17.10.84**

(51) Int. Cl.⁴: **G 01 M 11/00**

(54) Test method for optical fibres and apparatus for performing the test method.

(30) Priority: **18.10.83 JP 195024/83**

(43) Date of publication of application:
**24.04.85 Bulletin 85/17**

(45) Publication of the grant of the patent:
**31.05.89 Bulletin 89/22**

(84) Designated Contracting States:
**DE FR GB**

(56) References cited:
**FR-A-2 293 709**
**GB-A-2 011 751**
**US-A-4 243 320**
**PATENTS ABSTRACTS OF JAPAN, vol. 6, no. 30 (P-103) 908r, 23rd February 1982; & JP - A - 56 151 336 (NIPPON DENSHIN DENWA KOSHA) 24-11-1981**
**ELECTRONICS LETTERS, vol. 20, no. 18, 30th August 1984, pages 714-716, Staines, Middlesex, GB; K. SUZUKI et al.: "Optical time-domain reflectometer with a semiconductor laser amplifier"**

(73) Proprietor: **NIPPON TELEGRAPH AND TELEPHONE CORPORATION**
**1-6 Uchisaiwaicho 1-chome Chiyoda-ku Tokyo (JP)**

(72) Inventor: **Tokuda, Masamitsu**
**2023-36 Horimachi**
**Mito-shi Ibaraki (JP)**
Inventor: **Horiguchi, Tsuneo**
**Suite 104 Bldg.2 2-4 Higashihara**
**Mito-shi Ibaraki (JP)**

(74) Representative: **Pike, Harold John et al**
**Abel & Imray Northumberland House 303-306 High Holborn**
**London, WC1V 7LH (GB)**

Courier Press, Leamington Spa, England.

# Description

This invention relates to an improvement to a method for testing an optical fibre to determine the optical transmission characteristics or the break points of the optical fibre, comprising the steps of injecting an optical pulse signal at one end of the optical fibre and receiving light propagating in the opposite direction because of the reflection or the backscattering of the optical pulse signal within the optical fibre, and apparatus for performing the improved method.

When an optical pulse signal is injected into one end of an optical fibre, optical energy scattered backwards in the optical fibre and Fresnel-reflection at non-uniform points or break points of the optical fibre returns to the input end as a wave propagating in the opposite direction. From a return wave received at the end where the optical pulse signal is injected, it is possible to determine the optical transmission characteristics or non-uniform points or break points of the fibre.

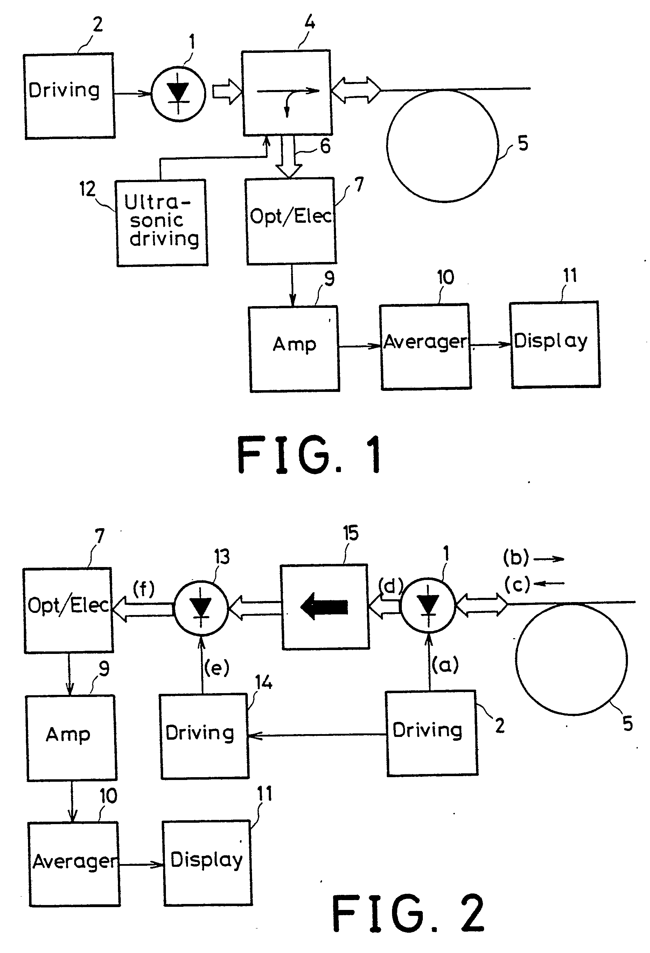

Fig. 1 shows a prior art apparatus for such a purpose. A semiconductor laser, which is used as a light source 1, is made to generate optical pulse signals by a driving circuit 2. The optical pulse signal is injected at one end of an optical fibre 5 which is being tested, via an optical directional coupler 4. The return wave generated within the test fibre 5 enters the optical direction coupler 4 from the fibre to be received by an optoelectric transducer 7 and converted into an electrical signal. The electrical signal is amplified by an amplifier 9 and displayed in a display 11 after the removal of noise by an averager 10. The optical directional coupler 4 is driven by an ultrasonic driving circuit 12.

In the type of apparatus described above, the optical directional coupler 4 interposed between the light source 1 and the test fibre 5 separates the light injected into the test fibre 5 from the returned light from the fibre 5, but inevitably introduces an energy loss, and the detection of the signal scattered backwards in the optical fibre is made more difficult because the loss further reduces an already small signal. Further, the ultrasonic driving circuit 12, which is needed for some optical directional couplers, increases the bulk and complexity of the apparatus.

Another prior art optical fibre test apparatus is the subject of U.S. Patent No. 4,070,118. This prior art Patent discloses a method of fault location in an optical fibre that includes using a laser device to provide pulses of light, feeding light pulses into the optical fibre under investigation and, at the same time, feeding the light pulses to a light receiver, feeding light pulses reflected from a fault in the optical fibre back through the laser device to the light receiver, and determining the location of a fault from the difference in time between an output signal from the light receiver on receipt of the light pulses from the laser device and an output signal from the light receiver on receipt of a reflected light pulse from the optical fibre, should there be a fault and, consequently, a reflected light pulse.

The prior art test apparatus disclosed in U.S. Patent No. 4,070,118 is incapable of providing information relating to the overall optical transmission characteristics, or of lack of uniformity of transmission characteristic, of an optical fibre.

An object of the present invention is the provision of a method, which is an improvement over the prior art method, of testing an optical fibre, and apparatus for performing the improved method.

In accordance with the present invention, a method of testing an optical fibre comprises the steps of energising a device that emits an optical pulse signal when energised, injecting the resultant optical pulse signal into one end of an optical fibre to be tested, passing the optical output returning from the optical fibre due to reflection or backscattering of the optical pulse signal through the device, and applying the output from the device, via an optoelectric transducer, to apparatus that responds thereto and indicates the optical transmission characteristics of the fibre, characterised in that, the method includes the step of preventing the response of the apparatus during the emission of the light pulse.

The step of preventing the response of the apparatus during the emission of the optical pulse signal may be achieved by blocking the transmission of light to the optoelectric transducer during the emission of the optical pulse signal. Alternatively, the step of preventing the response of the apparatus during emission of the optical pulse signal may be achieved by suppressing signals of high levels in the electrical output of the optoelectric transducer.

Preferably, the method includes the step of generating the optical pulse signal from a semiconductor laser and amplifying light returning from the optical fibre by means of the semiconductor laser.

Preferably, the method includes the step of generating the optical pulse signal by energising a semiconductor laser to a level at which the laser emits a light pulse and, after the light pulse is emitted, energising the semiconductor laser to a level below that at which it emits light and at which it amplifies the returned light passing through it.

Apparatus for performing the method comprises a light source, a circuit for driving the light source to generate optical pulse signals, optical coupling means for coupling the output light from the light source to one end of the optical fibre to be tested, and receiving means so disposed at the side of the light source remote from the optical fibre that the optical output returning from the optical fibre passes through the light source and that output is applied, via an optoelectric transducer, to the receiving means that responds thereto and indicates the optical transmission characteristics of the fibre, characterised in that, in the operation of the apparatus, the receiving means is prevented from responding during the emission of the light pulse.

An optical gate circuit, that is so controlled as to be in an OFF-state at the times that the light source generates optical pulse signals and to be in and ON-state for the optical output returning from the optical fibre, may be so positioned as to block the transmission of light to the optoelectric transducer during the emission of the light pulse.

As a means of avoiding the use of an optical gate circuit, use may be made of an optoelectric transducer that is highly responsive to larger optical level changes.

As a further alternative to the use of an optical gate circuit, a switch circuit or a limiter circuit may be used to suppress signals of high levels in the electrical output from the optoelectric transducer.

Preferably, the light source is a semi-conductor laser, and the light source driving circuit operates to first drive the semiconductor laser to cause it to emit a light pulse and, subsequently, to drive the semiconductor laser to cause it to amplify the optical output returning from the optical fibre.

Preferably, the optical gate circuit comprises a semiconductor laser, and a means is provided for so driving the semiconductor laser as to cause it to amplify the optical output returning from the optical fibre.

Preferably, the apparatus includes a filter located between the light source and the receiving means to selectively pass the output light wavelength of the light source.

The apparatus for testing an optical fibre may be included in a system that includes an optical fibre, for example, a communications system.

The present invention provides an optical time domain reflectometer which does not include an optical directional coupler. This removes the loss caused by the optical directional coupler and consequently, expands the dynamic range of measurement by an amount equal to the loss. The apparatus according to the present invention is simpler than that using an optical directional coupler and therefore may be more compact.

When a semiconductor laser is used to amplify the light passing through the laser, the dynamic measurement range may be improved. Although the amplification factor of a semi-conductor laser is small, it is possible to achieve amplification to a considerably higher order, the laser wavelength and the resonance wavelength being almost identical for any device capable of performing both functions.

As when a semiconductor device is used as the optical gate circuit, the available bandwidth may be as high as 2 GHz, and the length resolution in measurements of this type may be greatly enhanced.

This invention is highly effective in the nondestructive testing of optical fibers in communication systems.

The invention will now be described by way of example only, and with reference to the accompanying drawings, in which:—

Fig. 1 is a block diagram representation of a prior art apparatus.

Fig. 2 is a block diagram representation of an embodiment of the apparatus according to the present invention.

Fig. 3 are signal waveform representations of forward and return light energy levels in Fig. 2,

Fig. 4 is a graph showing the backscattered optical signal versus fibre length resulting from a test carried out with an embodiment of the apparatus according to the present invention, and

Fig. 5 is a graph showing the measured amplification characteristics of a semiconductor laser when it is used as an optical amplifier in an embodiment of the apparatus according to the present invention.

An embodiment of the present invention will now be described in more detail referring to the attached drawings, of which Fig. 2 is a block diagram of an embodiment of the apparatus according to the present invention.

Referring to Fig. 2 a semiconductor laser light source 1 is supplied with driving current by a driving circuit 2. Optical pulse signals generated by the light source 1 are optically coupled with an end of a test fibre 5. Within the test fibre 5, the optical pulse signal propagates in the direction marked by the arrow (b). The backscattered optical signal and the reflected optical signal arising from the optical pulse signal propagate in the direction marked by the arrow (c) to come out of the input end the optical fibre.

A feature of this invention is that the light propagating in the opposite direction to the launch direction in the test fiber 5 returns to the light source which emitted the optical pulse signal without passing through any optical directional couplers, passes through the light source and is finally received by an optoelectric transducer 7 via an isolator 15 and an optical gate circuit 13. The optical gate circuit 13 in this embodiment comprises a second semiconductor laser and the second semiconductor laser is driven by a second driving circuit 14 which is synchronized with the driving circuit 2.

An isolator 15 is inserted so as to allow optical transmission only in one direction, i.e. from the light source 1 to the optical gate circuit 13 in order to prevent cross-coupling between the semiconductor laser of the light source 1 and the semi-conductor laser of the optical gate circuit 13. The isolator 15 used in this embodiment operates by Faraday rotation and is made of YIG crystal to which a magnetic field is applied.

The output electric signal from the opto-electric transducer 7 is amplified by an amplifier 9, noise is removed by an averager 10 and the result is displayed on a display 11.

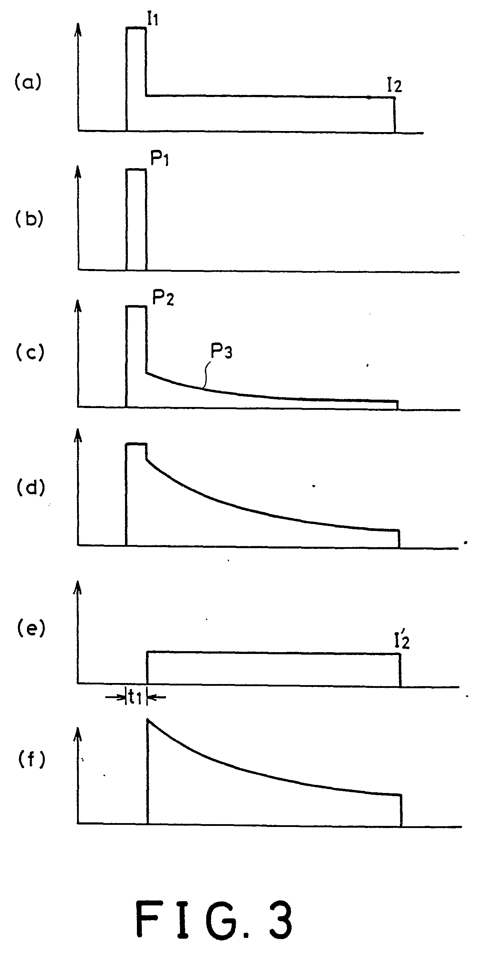

Figs. 3 (a) through (f) are charts showing signal waveforms at the points (a) through (f) in Fig. 2. In this apparatus the semiconductor laser of the light source 1 is driven by the driving circuit 2 by driving current shown in Fig. 3(a). In other words, driving current $I_1$ of a level high enough to cause oscillation of the semiconductor laser is supplied for a short time while driving current $I_2$ of a level lower than the threshold current which causes laser oscillation of the semiconductor laser is supplied for a considerably longer time.

During the supply of the high level driving current $I_1$, the light source 1 supplies an optical pulse signal $P_1$ shown in Fig. 3(b) to the test fibre 5. During the period when the optical pulse signal $P_1$ propagates through the test fibre 5 and a wave $P_3$ propagating in the opposite direction occurs, the light source 1 is supplied with the low level driving current $I_2$ and the semiconductor laser of the light source 1 functions as an optical amplifier. The optical signal which passes through the light source 1, therefore, becomes an amplified signal shown in Fig. 3 (d).

This optical signal then passes through the isolator 15 and through the optical circuit 13. The semiconductor laser of the optical gate circuit 13 is driven in a manner shown in Fig. 3 (e). In other words, as the driving circuit 14 is synchronized with the driving circuit 2, during the time $t_1$ when the driving circuit 2 provides high level driving current, the circuit 14 does not provide any driving current. Conversely, during the period when the driving circuit 2 provides low level driving current, the circuit 14 provides a driving current $I_2'$ of a level lower than the threshold current which causes oscillation of the semiconductor laser. Therefore, the optical gate circuit 13 shuts off the optical pulse signal which is emitted from the rear of the light source 1 and high level reflected light $P_2$ which occurs at the input end of the test fiber 5, and only the weak light from the test fibre propagating later in the opposite direction through the light source is allowed to pass. The output light of the optical gate circuit 13 is shown in Fig. 3 (f). The light is received by an optoelectric transducer 7.

Semiconductor lasers suitable for use as the light source 1 and the optical gate circuit 13 have characteristics such that, if they are provided with a high level of driving current, they oscillate but if provided with a suitably low level of driving current, they will amplify light reaching them. These are known characteristics usually applied to optical switching. For example, a semiconductor laser starts amplification when fed with driving current which is almost 90% or higher but less than 100% of the threshold current which causes laser oscillation.

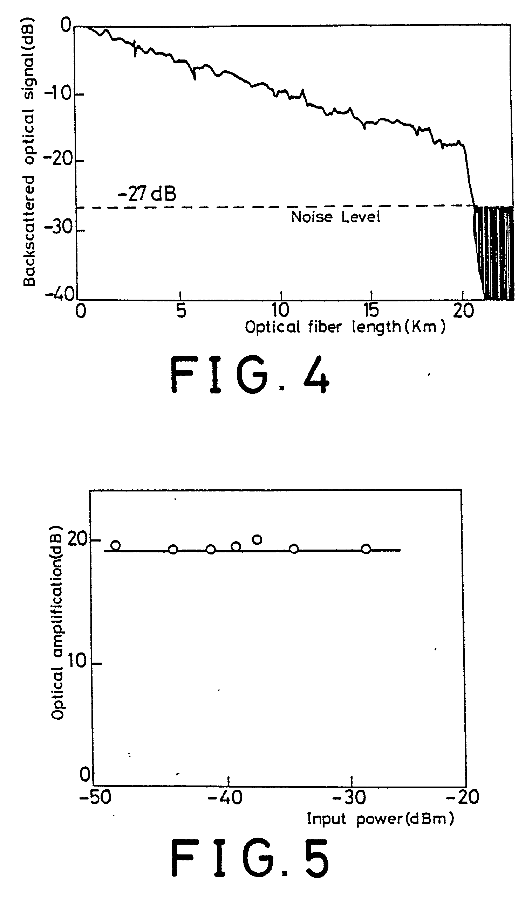

Fig. 4 shows the test result for the above embodiment of Fig. 2. In this test, a single-mode optical fibre 20.8 km long was used as the optical fibre 5 and the relative value of the backscattered light power and the injected light power were measured consecutively. The remote end of the test fibre 5 was immersed in a refractive index matching oil to remove Fresnel reflection.

The optical pulse peak power of the light source was 3 dBm and the optical width was 1 μm. A semiconductor laser of InGaAsP BH (buried heterojunction) structure and oscillation wavelength of 1.3 μm (as described, for example, by Toukada in J. Appl. Phys. Vol. 45 No. 11) was used as the light source 1. This semiconductor laser has a laser oscillation threshold of about 56 mA. The high level driving current mentioned above was set at 100 mA while the low level driving current was set at 53.2 mA. In this test, light is generated on the side of the laser away from the optical fibre, and a short burst of light, and reflected light, will come from the rear end of the fibre (distance zero km.) immediately after the emission of the light pulse from the laser, but these effects are omitted from Fig. 4.

Fig. 4 shows that backscattered light is measured all along the length of the optical fibre 5 and the power ratio of backscattered light is measurable to −27dB, making the dynamic range of this apparatus about 27dB. The dynamic range of the prior art apparatus shown in Fig. 1 is about 18 dB. It will be evident from the description of the prior art apparatus and the apparatus of the present invention that the apparatus of the present invention is not only simpler than that of the prior art but also has improved dynamic range.

The optical amplification characteristics and the level linearity of the semiconductor laser, referred to above, are shown in Fig. 5. In deriving Fig. 5, a low level driving current of 53.2 mA was supplied to the semiconductor laser apparatus, an optical signal of between −27dBm and −48 dBm was then injected into the semiconductor laser via a short length of optical fibre and the amplification was measured. The polarisation of the injected light was made coincident with the TE mode of the semiconductor laser. Fig. 5 shows that a gain of about 19 dB with excellent linearity is obtained in the range of the aforementioned input signal level from the semiconductor laser when it is used as an optical amplifier by being driven at a low current level.

Not shown is the case when the polarisation of the injected light varies freely, when the gain is, on average, identical to that for 45° polarisation, the gain being then about 16 dB, that is, lower by 3 dB, but still with excellent linearity.

The performance of the apparatus, in accordance with the present invention, may be improved when a laser is included and used both as a light source and an amplifier. Improvements of some 10 dB may be possible.

For example, a frequenty selective filter which passes only signal light frequencies may be inserted in the path of the light which has passed through the light source 1 either before or after the isolator 15, to remove noise outside the laser light band, and the signal to noise ratio of the optoelectric transducer 7 will be greatly improved.

As a light source, besides the above mentioned semiconductor laser, a solid state laser such as a YAG laser or a Rugby laser, a gas laser such as a He-Ne laser, an Argon laser, or a krypton laser or other optical fibre lasers may be used. The light source does not need to be capable of amplification. A light source is suitable so long as it lets the light through with small loss.

Alternatives to the optical switch mentioned above are an acoustooptic deflector, a switch using electrooptic effects, a switch using magnetooptic effects, or a mechanical optical switch.

It may be possible to put the present invention into effect without the use of an optical gate circuit at all if the optoelectric transducer which receives the return light energy is the type highly responsive to larger optical level changes. Moreover, a switch circuit or a limiter circuit may be used in order to suppress signals of high levels in the electric output from the optoelectric transducer.

The optical isolator mentioned above is not always required in this invention depending on the characteristics of the light source and the optical gate circuit.

It will be appreciated that the test method may be used in setting up a communication system which includes one or more optical fibres, and, subsequently, for assessing the performance of the system. The apparatus, in accordance with the present invention, may therefore be included within a communication system that relies, at least partly, on optical fibres.

## Claims

1. A method of testing an optical fibre comprising the steps of energising a device that emits an optical pulse signal when energised, injecting the resultant optical signal pulse into one end of the optical fibre to be tested, passing the optical output returning from the optical fibre due to reflection or backscattering of the optical pulse signal through the device, and applying the output from the device, via an optoelectric transducer, to apparatus that responds thereto and indicates the optical transmission characteristics of the fibre, characterised in that, the method includes the step of preventing the response of the apparatus during the emission of the light pulse.

2. A method of testing an optical fibre, as claimed in claim 1, including the step of blocking the transmission of light to the optoelectric transducer during the emission of the optical pulse signal in order to prevent the response of the apparatus.

3. A method of testing an optical fibre, as claimed in claim 1, including the step of suppressing signals of high levels in the electrical output of the optoelectric transducers in order to prevent the response of the apparatus during the emission of the optical pulse signal.

4. A method of testing an optical fibre claimed in any one of claims 1 to 3, which includes generating the optical pulse signal from a semiconductor laser and amplifying returned light by means of the semiconductor laser.

5. A method of testing an optical fibre, as claimed in any one of claims 1 to 4, which includes generating the optical pulse signal by energising a semiconductor laser to a level at which it emits a light pulse, and, after the light pulse is emitted, energising the semiconductor laser to a level below that at which it emits light and at which it amplifies the returned light passing through it.

6. Apparatus for testing an optical fibre comprising a light source (1), a circuit (2) for driving the light source (1) to generate optical pulse signals, optical coupling means for coupling output light from the light source (1) to one end of the optical fibre (5) to be tested, and receiving means (9, 10, 11) so disposed at the side of the light source (1) remote from the optical fibre (5) that the optical output returning from the optical fibre (5) passes through the light source (1) and that output is applied, via an optoelectric transducer (7), to the receiving means (9, 10, 11) that responds thereto and indicates the optical transmission characteristics of the fibre (5), characterised in that, in the operation of the apparatus, the receiving means (9, 10, 11) is prevented from responding during the emission of the light pulse.

7. Apparatus for testing an optical fibre, as claimed in claim 6, including an optical gate circuit (13) that is so controlled as to be in an OFF-state at the times that the light source (1) generates optical pulse signals and to be in an ON-state for the optical output returning from the optical fibre (5).

8. Apparatus for testing an optical fibre, as claimed in claim 6, wherein the optoelectric transducer (7) is highly responsive to larger optical level changes.

9. Apparatus for testing an optical fibre, as claimed in claim 6, wherein a switch circuit or a limiter circuit is used in order to suppress signals of high levels in the electrical output from the optoelectric transducer (7).

10. Apparatus for testing an optical fibre, as claimed in any one of claims 6 to 9, wherein the light source (1) is a semiconductor laser, and the light source driving circuit (2) operates to first drive the semiconductor laser to cause it to emit a light pulse, and, subsequently, to drive the semiconductor laser to cause it to amplify the optical output returning from the optical fibre.

11. Apparatus for testing an optical fibre, as claimed in any one of claims 7 to 10, wherein the optical gate circuit (13) comprises a semiconductor laser, and a means (14) is provided for so driving the semiconductor laser as to cause it to amplify the optical output returning from the optical fibre.

12. Apparatus for testing an optical fibre, as claimed in any one of claims 6 to 11, including a filter located between the light source (1) and the receiving means (9, 10, 11) to selectively pass the output light wavelength of the light source (1).

13. A system including apparatus for testing an optical fibre as claimed in any one of claims 6 to 12.

14. A communication system including apparatus for testing an optical fibre as claimed in any one of claims 6 to 12.

## Patentansprüche

1. Verfahren zum Testen einer optischen Faser, bestehend aus den Schritten des Inbetriebsetzens eines Geräts, das ein optisches Pulssignal aussendet, wenn es in Betrieb ist, des Einleitens des resultierenden optischen Pulssignals in eine Ende der zu testenden optischen Faser, des Hindurchführens des optischen Ausgangs, der von der optischen Faser aufgrund von Reflektion oder Rückstreuung des optischen Pulssignals zurückkehrt, durch das Gerät und des Anlegens des Ausgangs von dem Gerät über einen optoelektrischen Wandler an eine Einrichtung, die hierauf anspricht und die optischen Transmissionseigenschaften der Faser anzeigt, dadurch gekennzeichnet, daß das Verfahren den Schritt des Verhinderns der Ansprache der Einrichtung während des Aussendens des Lichtpulses umfaßt.

2. Verfahren zum Testen einer optischen Faser, wie in Anspruch 1 beansprucht, umfassend den Schritt des Blockierens der Transmission von Licht zum optoelektrischen Wandler während des Aussendens des optischen Pulssignals, um die Ansprache der Einrichtung zu verhindern.

3. Verfahren zum Testen einer optischen Faser, wie in Anspruch 1 beansprucht, umfassend den Schritt des Unterdrückens von Signalen mit hohen Pegeln im elektrischen Ausgang des optoelektrischen Wandlers, um die Ansprache der Einrichtung während des Aussendens des optischen Pulssignals zu verhindern.

4. Verfahren zum Testen einer optischen Faser, wie in einem der Ansprüche 1 bis 3 beansprucht, das das Erzeugen des optischen Pulssignals von einem Halbleiterlaser und das Verstärken von zurückgekehrtem Licht mittels des Halbleiterlasers umfaßt.

5. Verfahren zum Testen einer optischen Faser, wie in einem der Ansprüche 1 bis 4 beansprucht, das das Erzeugen des optischen Pulssignals durch Inbetriebsetzen eines Halbleiterlasers bis zu einem Pegel, bei dem er einen Lichtimpuls emittiert, und, nachdem er den Lichtimpuls emittiert hat, das Betreiben des Halbleiterlaser bis zu einem Pegel unter demjenigen, bei dem er Licht emittiert und bei dem er das zurückgeworfene Licht, das durch ihn hindurchläuft, verstärkt.

6. Apparat zum Testen einer optischen Faser, umfassend eine Lichtquelle (1), einen Schaltkreis (2) zum Betreiben der Lichtquelle (1) zum Erzeugen optischer Pulssignale, optische Kopplungsmittel zum Koppeln des Ausgangslichts von der Lichtquelle (1) mit einem Ende der zu testenden optischen Faser (5), und Empfangsmittel (9, 10, 11), die an der von der optischen Faser (5) abgewandten Seite der Lichtquelle (1) so angeordnet sind, daß der optische Ausgang, der von der optischen Faser (5) zurückkehrt, durch die Lichtquelle (1) hindurchläuft und daß der Ausgang über einen optoelektrischen Wandler (7) an die Empfangsmittel (9, 10, 11) angelegt wird, die hierauf ansprechen und die optischen Transmissioneigenschaften der Faser (5) anzeigen, dadurch gekennzeichnet, daß beim Betrieb des Apparats die Empfangsmittel (9, 10, 11) an einer Ansprache während der Emission des Lichtpulses gehindert sind.

7. Apparat zum Testen einer optischen Faser, wie in Anspruch 6 beansprucht, umfassend einen optischen Gatterkreis (13), der derart gesteuert ist, daß er sich in einem AUS-Zustand zu den Zeiten, in denen die Lichtquelle (1) optische Pulssignale erzeugt, und in einem AN-Zustand für den optischen Ausgang, der von der optischen Faser (5) zurückkehrt, befindet.

8. Apparat zum Testen einer optischen Faser, wie in Anspruch 6 beansprucht, wobei der optoelektrische Wandler (7) auf größere Änderungen des optischen Pegels stark anspricht.

9. Apparat zum Testen einer optischen Faser, wie in Anspruch 6 beansprucht, wobei ein Schalterkreis oder ein Begrenzerkreis verwendet wird, um Signale hohen Pegels im elektrischen Ausgang des optoelektrischen Wandlers (7) zu unterdrücken.

10. Apparat zum Testen einer optischen Faser, wie in einem der Ansprüche 6 bis 9 beansprucht, wobei die Lichtquelle (1) ein Halbleiterlaser ist und der Lichtquellentreiberkreis (2) arbeitet, um den Halbleiterlaser zu betreiben, um zu bewirken, daß er einen Lichtimpuls emittiert, und anschließend den Halbleiterlaser zu betreiben, um zu bewirken, daß er den optischen Ausgang, der von der optischen Faser zurückkehrt, verstärkt.

11. Apparatus zum Testen einer optischen Faser, wie in einem der Ansprüche 7 bis 10 beansprucht, wobei der optische Gatterkreis (13) einen Halbleiterlaser umfaßt und Mittel (14) hierfür vorgesehen sind, um den Halbleiterlaser zu betreiben, um zu bewirken, daß er den optischen Ausgang, der von der optischen Faser zurückkehrt, verstärkt.

12. Apparatus zum Testen einer optischen Faser, wie in einem der Ansprüche 6 bis 11 beansprucht, umfassend ein Filter, das zwischen der Lichtquelle (1) und den Empfangsmitteln (9, 10, 11) angeordnet ist, um selektiv die Ausgangslichtwellenlänge der Lichtquelle (1) durchzulassen.

13. System umfassend einen Apparatus zum Testen einer optischen Faser, wie in einem der Ansprüche 6 bis 12 beansprucht.

14. Kommunikationssystem umfassend einen Apparat zum Testen einer optischen Faser wie in einem der Ansprüche 6 bis 12 beansprucht.

**Revendications**

1. Un procédé de contrôle d'une fibre optique, comprenant les étapes consistant à exciter un dispositif qui émet un signal impulsionnel optique quand il est excité, à injecter le signal impulsionnel optique résultant dans une extrémité de la fibre optique à contrôler, à laisser passer le signal optique de sortie revenant de la fibre optique du fait d'une réflexion ou d'une rétro-dispersion du signal impulsionnel optique au travers du dispositif, et appliquer le signal de sortie dudit dispositif, par l'intermédiaire d'un transducteur opto-électrique, à un appareil qui répond à ce signal et qui indique la caractéristique de transmission optique de la fibre, caractérisé en ce que le procédé comprend l'étape consistant à empêcher la réponse de l'appareil pendant l'émission de l'impulsion lumineuse.

2. Un procédé de contrôle d'une fibre optique tel que revendiquée dans la revendication 1, comprenant l'étape consistant à arrêter la transmission de lumière vers le transducteur opto-électrique pendant l'émission du signal impulsionnel optique de façon à empêcher la réponse de l'appareil.

3. Un procédé de contrôle d'une fibre optique tel que revendiqué dans la revendication 1, comprenant l'étape consistant à supprimer les signaux de hauts niveaux dans le signal de sortie électrique du transducteur opto-électrique de manière à empêcher la réponse de l'appareil pendant l'émission du signal impulsionnel optique.

4. Un procédé de contrôle d'une fibre optique tel que revendiqué dans une quelconque des revendications 1 à 3, qui consiste à produire le signal impulsionnel optique à partir d'un laser à semiconducteur et d'amplifier la lumière en retour au moyen du laser semiconducteur.

5. Un procédé de contrôle d'une fibre optique tel que revendiqué dans une quelconque des revendications 1 à 4, qui consiste à produire le signal impulsionnel optique par excitation d'un laser à semi-conducteur à un niveau auquel il émet une impulsion lumineuse et, après que l'impulsion lumineuse est émise, à exciter le laser à semiconducteur jusqu'à un niveau inférieur à celui auquel il émet de la lumière et auquel il amplifie la lumière en retour le traversant.

6. Appareil pour contrôler une fibre optique, comprenant une source lumineuse (1), un circuit (2) pour exciter la source lumineuse (1) de manière à produire des signaux impulsionnels optiques, un moyen de couplage optique pour transmettre la lumière de sortie de la source lumineuse (1) à une extrémité de la fibre optique (5) à contrôler, et des moyens de réception (9, 10, 11) disposés sur le côté de la source lumineuse (1) qui est éloigné de la fibre optique (5) de telle sorte que le signal de sortie optique revenant de la fibre optique (5) passe au travers de la source lumineuse (1) et que le signal de sortie soit appliqué, par l'intermédiaire d'un transducteur opto-électrique (8), aux moyens de réception (9, 10, 11) qui répondent à celui-ci et indiquent les caractéristiques de transmission optique de la fibre (5), caractérisé en ce que, pendant le fonctionnement de l'appareil, les moyens de réception (9, 10, 11) sont empêchés de répondre pendant l'émission de l'impulsion lumineuse.

7. Appareil pour contrôler une fibre optique tel que revendiqué dans la revendication 6, comprenant un circuit formant porte optique (13), qui est commandé de façon à se trouver dans un état de fermeture aux monents où la source lumineuse (1) produit des signaux impulsionnels optiques et à se trouver dans un état d'ouverture pour le signal de sortie optique revenant de la fibre optique (5).

8. Appareil pour contrôler une fibre optique, tel que revendiqué dans la revendication 6, dans lequel le transducteur opto-électrique (7) réagit fortement à de grandes variations du niveau optique.

9. Appareil pour contrôler une fibre optique, tel que revendiqué dans la revendication 6, dans lequel un circuit de commutation ou un circuit de limitation est utilisé pour supprimer des signaux de hauts niveaux dans le signal électrique de sortie du transducteur opto-électrique (7).

10. Appareil pour contrôler une fibre optique, tel que revendiqué dans une quelconque des revendications 6 à 9, dans lequel la source lumineuse (1) est un laser à semiconducteur et le circuit (2) d'excitation de la source lumineuse opère de façon à exciter d'abord le laser à semiconducteur pour lui faire émettre une impulsion de lumière, et ensuite pour exciter le laser à semiconducteur pour lui faire amplifier le signal optique de sortie revenant de la fibre optique.

11. Appareil pour contrôler une fibre optique, tel que revendiqué dans une quelconque des revendications 7 à 10, dans lequel le circuit formant porte optique (13) comprend un laser à semiconducteur et un moyen (14) est prévu pour exciter le laser à semiconducteur de façon à lui faire amplifier le signal optique de sortie revenant de la fibre optique.

12. Appareil pour contrôler une fibre optique, tel que revendiqué dans une quelconque des revendications 6 à 11, comprenant un filtre placé entre la source lumineuse (1) et les moyens de réception (9, 10, 11) afin de laisser passer sélectivement la longueur d'onde de la lumière de sortie de la source lumineuse (1).

13. Un système comprenant un appareil pour contrôler une fibre optique, tel que revendiqué dans une quelconque des revendications 6 à 12.

14. Un système de communication comprenant un appareil pour contrôler une fibre optique, tel que revendiqué dans une quelconque des revendications 6 à 12.

FIG. 1

FIG. 2

EP 0 138 623 B1

(a)

(b)

(c)

(d)

(e)

(f)

F I G. 3

# FIG. 4

# FIG. 5